# EUROPÄISCHE PATENTSCHRIFT

(11) **EP 1 389 223 B1**
(45) Veröffentlichungstag und Bekanntmachung des Hinweises auf die Patenterteilung: **23.07.2008**
(21) Anmeldenummer: 02735343.2
(22) Anmeldetag: 07.05.2002
(51) Int. Cl.: C08G 18/79, C07D 207/00, C07D 209/00, C07D 231/00, C07D 233/00, C07D 249/00, C07D 257/00

(54) **VERFAHREN ZUR HERSTELLUNG VON POLYISOCYANATEN**
METHOD FOR PRODUCING POLYISOCYANATES
PROCEDE POUR LA PRODUCTION DE POLYISOCYANATES

(30) Priorität: 14.05.2001 DE 10123416
(43) Veröffentlichungstag der Anmeldung: 18.02.2004
(73) Patentinhaber: Bayer MaterialScience AG, 51368 Leverkusen (DE)
(72) Erfinder: KÖCHER, Jürgen, 40764 Langenfeld (DE); RICHTER, Frank, 51373 Leverkusen (DE); LAAS, Hans-Josef, 51467 Bergisch Gladbach (DE); WINTERMANTEL, Matthias, 51061 Köln (DE)
(86) Internationale Anmeldenummer: PCT/EP2002/004999
(87) Internationale Veröffentlichungsnummer: WO 2002/092658

(56) Entgegenhaltungen:
- US-A- 3 252 945
- US-A- 4 265 798

## Beschreibung

Die Erfindung betrifft ein neues Verfahren zur Herstellung von Polyisocyanaten.

Die Oligomerisierung von Isocyanaten ist eine lange bekannte, in der Praxis gut eingeführte Methode zur Modifizierung in der Regel difunktioneller, niedermolekularer Isocyanate um zu Produkten mit vorteilhaften Anwendungseigenschaften, z.B. auf dem Lack- und Beschichtungsmittelsektor, in der vorliegenden Schrift allg. Polyisocyanate genannt, zu gelangen (J. Prakt. Chem./Chem. Ztg. 1994, 336, 185-200.).

Für lichtbeständige, nicht vergilbende Lacke und Beschichtungen werden in der Regel Polyisocyanate auf Basis aliphatischer Düsocyanate eingesetzt. Der Term "aliphatisch" bezieht sich dabei auf die Kohlenstoffatome, an die die NCO-Gruppen des Monomers gebunden sind, d.h. im Molekülverband können durchaus aromatische Ringe enthalten sein, die dann definitionsgemäß keine NCO-Gruppen tragen.

Je nach Art des bei der jeweiligen Oligomerisierungsreaktion hauptsächlich aus den vorher freien NCO-Gruppen gebildeten Strukhutyps unterscheidet man dabei verschiedene Produkte und Verfahren.

Von besonderer Bedeutung sind die sogenannte Dimerisierung unter Bildung von Uretdionstrukturen der Formel (Idealstruktur) **1**, beschrieben z.B. in DE-A 16 70 720, und die sogenannte Trimerisierung unter Bildung von Isocyanuratstrukturen der Formel (Idealstruktur) **2**, beschrieben z.B. in EP-A 0 010 589. Neben den letztgenannten Trimeren sind z.B. nach der Lehre der EP-A 0 798 299 zu den Isocyanuraten isomere, d.h., ebenfalls trimere Produkte mit Iminooxadiazindionstruktur, Formel (Idealstruktur) **3**, erhältlich. Wird in der vorliegenden Schrift auf beide isomeren Trimeren Bezug genommen, Isocyanurate und Iminooxadiazindione, wird generell von Trimeren bzw. Trimerisaten gesprochen, anderenfalls wird die exakte Bezeichnung gewählt. Dimerisierung und Uretdionbildung werden synonym verwendet. Der Term "Oligomerisierung" umfasst alle Arten der Modifizierung.

Bei der Dimerisierung und Trimerisierung von Isocyanaten entstehen neben den für die Reaktion namensgebenden Produkten (Dimer für Dimerisierung, Trimer für Trimerisierung) fast immer simultan auch die jeweils anderen Reaktionsprodukte: Trimere der Formeln 2 und 3 bei der Dimerisierung sowie durch Dimerisierung Uretdione der Formel 1 bei der Trimerisierung, deren Anteil allerdings jeweils gering ist:

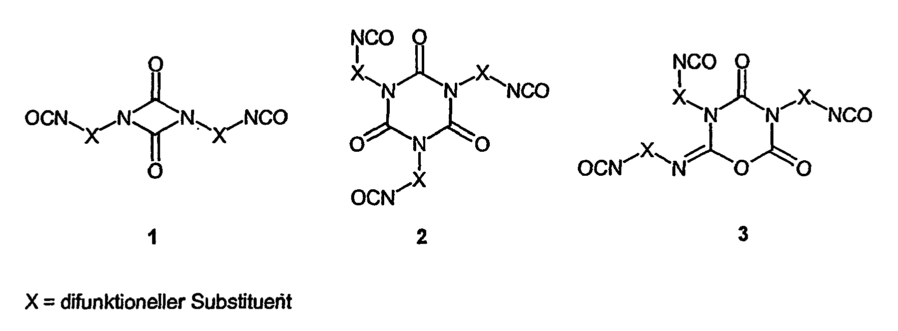

Da die vollständige Umsetzung aller monomeren Düsocyanatmoleküle OCN-X-NCO in einem Reaktionsschritt durch Weiterreaktion der NCO-Gruppen in den Formeln (Idealstrukturen) **1 - 3** zu hochmolekularen, extrem hochviskosen bzw. gelartigen, für einen Einsatz auf dem Lack- und Beschichtungsmittelsektor unbrauchbaren Produkten führen würde, verfährt man bei der katalysierten Herstellung von Lackpolyisocyanaten technisch so, dass nur ein Teil des Monomers umgesetzt, die Weiterreaktion durch Zugabe eines Katalysatorgiftes ("Abstopper") unterbunden und das nicht umgesetzte Monomer anschließend abgetrennt wird. Ziel ist es, bei möglichst niedriger Viskosität des monomerenarmen Lackpolyisocyanatharzes einen möglichst geringen Anteil nicht umgesetzten Monomers abtrennen zu müssen, d.h. angestrebt werden ein hoher Umsatz in der Reaktion einher gehend mit einer hohen Harzausbeute im nachgeschalteten Aufarbeitungsschritt bei gutem Eigenschaftsniveau der Polyisocyanatharze.

Dimere auf Basis von aliphatischen Diisocyanaten weisen eine deutlich niedrigere Viskosität auf als Trimere. Unabhängig vom Umsetzungsgrad bzw. der Harzausbeute sind sie aber streng linear, d.h. NCO-difunktionell aufgebaut. Trimere hingegen weisen die für eine hohe Vemetzungsdichte im Polymer und, daraus resultierend, gute Beständigkeitseigenschaften desselben nötige höhere Funktionalität auf. Ihre Viskosität steigt allerdings mit steigendem Umsatz in der Reaktion sehr schnell an. Im Vergleich zu den isomeren Isocyanuraten haben die Iminooxadiazindione bei gleicher NCO-Funktionalität des Polyisocyanatharzes eine deutlich niedrigere Viskosität (vgl. Proc. of the XXIV. Fatipec Conference, 8.-11. June 1998, Interlaken, CH, Vol. D, pp. D-136 - 137), das Viskositätsniveau der Uretdione wird allerdings auch von ihnen nicht erreicht.

**Stand der Technik** zur Herstellung von Polyisocyanaten vom Trimertyp ist die Isocyanat-Oligomerisierung unter Einsatz einer Vielzahl sowohl salzartig als auch kovalent aufgebauter Katalysatoren (J. Prakt. Chem./Chem. Ztg. 1994, 336, 192-196 und darin zitierte Literatur). Während man bei der Verwendung salzartig aufgebauter Verbindungen wie z.B. Carboxylate (z.B. DE-A 3 100 263), Fluoride (z.B. EP-A 339 396) oder Hydroxide (z.B. EP-A 330 966) für die Isocyanat-Oligomerisierung mit sehr geringen Katalysatormengen auskommt und in sehr kurzer Zeit zum gewünschten Umsatz gelangt, bedarf es bei Einsatz kovalent aufgebauter Trimerisierungskatalysatoren höherer Katalysatorkonzentrationen und/oder längerer Reaktionszeiten. Ein Beispiel hierfür ist die Oligomerisierung aliphatischer Düsocyanate mit N-Silylverbindungen, beschrieben z.B. in den EP-A 57 653, EP-A 89 297, EP-A 187 105, EP-A 197 864 sowie WO 99/07765.

Zur Herstellung von Polyisocyanaten mit Uretdionstruktur sind bisher ausschließlich kovalent aufgebaute Katalysatorsysteme beschrieben worden (J. Prakt. Chem./Chem. Ztg. 1994, 336, 196-198 und darin zitierte Literatur). Am weitesten verbreitet sind Trialkylphosphine (beschrieben u.a. in DE-A 1 670 720) sowie in 4-Stellung aminosubstituierte Pyridine (beschrieben u.a in DE-A 3 739 549).

**Der Nachteil der Verfahren des Standes der Technik** ist es einerseits, dass hochaktive, salzartig aufgebaute Katalysatoren nahezu ausschließlich zur Generierung von Trimeren aber kaum zur Uretdionbildung geeignet sind und die Uretdion-selektive(re)n Katalysatoren allesamt kovalent aufgebaut sind, weshalb sie in vergleichsweise hoher Konzentration, bezogen auf die Masse an Katalysator und zu oligomerisierendem Isocyanat, eingesetzt werden müssen und auch nur zu einem relativ langsamen Voranschreiten der Reaktion führen. Beides ist unter ökonomischen (Raum-Zeit-Ausbeute bei der Herstellung) und lacktechnologischen Gründen (störende Einflüsse von Katalysator und/oder Katalysatorfolgeprodukt im Polyisocyanat) nachteilig.

**Aufgabe der vorliegenden Erfindung** ist es daher, Katalysatorsysteme für die Isocyanatoligomerisierung zur Verfügung zu stellen, die salzartig aufgebaut und daher hochreaktiv sind aber trotzdem zur Bildung deutlicher Uretdionanteile in den resultierenden Polyisocyanaten führten.

Die vorstehend beschriebenen **Aufgabe ist** durch die Verwendung salzartiger Derivate bestimmter fünfgliedrigen N-Heterocyclen, die im Neutralmolekül mindestens ein, an ein Ringstickstoffatom gebundenes Wasserstoffatom tragen, als Katalysator zur Isocyanat-Oligomerisierung gelöst worden.

Der Erfindung liegt die **überraschende Beobachtung** zugrunde, dass salzartige Derivate bestimmter fünfgliedriger N-Heterocyclen, die im Neutralmolekül mindestens ein an ein Ringstickstoffatom gebundenes Wasserstoffatom tragen, die Isocyanat-Oligomerisierung katalysieren und dass dabei neben Isocyanat-Trimeren auch in erheblichem Umfang Uretdionstrukturen gebildet werden.

Stickstoffheterocyclen sind als neutrale, N-H- bzw. N-Alkyl-Gruppen tragende Verbindungen bereits in der Polyisocyanatchemie eingeführt. Allerdings werden sie meist als Blockierungsmittel für NCO-Gruppen (NH-Gruppen enthaltende Derivate, vgl. EP-A 0 741 157) bzw. als Stabilisator gegen eine Schädigung des aus den Polyisocyanaten hergestellten Lackfilmes durch UV-Strahlen eingesetzt. Hierfür beschrieben sind z.B. substituierte Benztriazole die im Molekül weitere OH-Gruppen enthalten, vgl. z.B. DE-A 198 28 935, WO 99/67226 und darin zit. Literatur.

In o.g. Einsatzfeldem wird keine Oligomerisierung der Isocyanatgruppen angestrebt, sondern ihre thermisch reversible Desaktivierung zur Ermöglichung einer einkomponentigen Verarbeitung bzw. eine Stabilisierung des Polyurethan-Kunststoffes bzw. Lackes. Eine Oligomerisierung der Isocyanatgruppen wäre in beiden Fällen sogar von Nachteil.

Weiterhin finden sich in der Patentliteratur zuweilen Hinweise auf die Verwendung von N-Heterocyclen als Additiv zur Beeinflussung der katalytischen Aktivität bestimmter Katalysatoren, als Katalysator selbst oder auch zur Unterdrückung unerwünschter Effekte wie Farbzahlanstieg etc. So beschreibt die WO 99/23128 ein System, u.a bestehend aus einem "Trimerisierungskatalysator" und Imidazol. Hierbei wird aber wiederum lediglich die Neutralverbindung des Stickstoffheterocyclus und nicht das Anion eingesetzt. Aus den Beispielen der WO 99/23128 geht hervor, dass Imidazol vor der Trimerisierung zum zu oligomerisierenden Isocyanat gegeben wird, weshalb zunächst die o.g. Additionsreaktion an die NCO-Gruppen des zu modifizierenden Isocyanates abläuft und daher auch später, nach Zugabe des "Trimerisierungskatalysators", keine ,in-situ`-Bildung des Imidazolat-Anions einsetzen könnte.

Weiterhin wird *in* Adv. Ureth. Sci. Techn. 1971, 1, 33 sowie in Synthesis, 1975, 463 die Di- bzw. Trimerisierung von Benzylisocyanat unter dem Einfluss von 1,2-Dimethylimidazol beschrieben. Anionen der Heterocyclen werden in den genannten Schriften nicht erwähnt. Auch ist durch das Fehlen eines aciden H-Atoms beim 1,2-Dimethylimidazol die Option einer in-situ Generierung anionischer Spezies nicht vorhanden. Das gleiche gilt für die Verfahren der EP-A 417 603, EP-A 566 247, EP-A 672 696 sowie EP-A 982 333, die ausschließlich N-Alkylgruppen tragende Heterocyclen berühren, bei denen aus o.g. Grunde die Generierung anionischer Spezies nicht möglich ist.

In unspezifischen Listen wird in US 3 252 945 im Zusammenhang mit der Oligomerisierung von Isocyanaten im allgemeinen neben zahlreichen mindestens zwei Stickstoffatome enthaltenden anionischen Heterocyclen auch die Möglichkeit des Einsatzes von Benzimidazol und Benztriazol genannt. Auf besondere Vorteile des Einsatzes von Imidazolaten und Triazolaten im Zusammenhang mit der Oligomerisierung gerade von aliphatischen Isocyanaten wird hingegen nicht hingewiesen.

Gegenstand der vorliegenden Erfindung ist.

Verfahren zur katalytischen Oligomerisierung von aliphatischen Isocyanaten, **dadurch gekennzeichnet**, dass als Oligomerisierungskatalysatoren salzartige Verbindungen zum Einsatz kommen, wobei

Pyrazol und/oder Imidazol, substituierte Pyrazole und/oder Imidazole sowie carbocyclisch und/oder heterocyclisch annelierte Derivate des Pyrazols ünd/oder Imidazols, sowie Spezies aus der Reihe der 1,2,3- sowie 1,2,4-Triazole, substituierte Spezies aus der Reihe der 1,2,3- sowie 1,2,4-Triazole sowie carbocyclisch und/oder heterocyclisch annelierte Spezies aus der Reihe der 1,2,3- sowie 1,2,4-Triazole verwendet werden.

### Beschreibung

Ganz allgemein ist es schwer, Voraussagen bezüglich der Eignung bestimmter Verbindungstypen als Katalysator für die Isocyanat-Oligomerisierung zu machen. Aussagen zur Selek-tivität hinsichtlich der Bildung verschiedener Isocyanat-Folgeprodukte und/oder der katalytischen Aktivität aus der Struktur des potenziellen Katalysatormoleküls ableiten zu wollen, ist nahezu unmöglich. Hier ist man auf empirische Untersuchungen angewiesen. Zur Steigerung der Effektivität dieser Untersuchungen werden die erfindungsgemäßen Katalysatoren in miniaturisierter und paralleler Fahrweise geprüft. Hierdurch kann man eine Vielzahl von Katalysatoren gleichzeitig auf Aktivität und Produktselektivität überprüfen. Die Verkleinerung der Ansätze reduziert die benötigten Mengen an Ausgangsmaterial, das Verfahren ist für erste Untersuchungen der Katalysatoraktivität und Produktselektivität in der Isocyanatchemie überraschend gut reproduzierbar. Da man, wie oben erwähnt, zur Identifizierung neuer Katalysatoren auf eine Vielzahl von empirischen Untersuchungen angewiesen ist, kommt dieser Beschleunigung des Prüfverfahrens große Bedeutung für eine schnelle Auffindung neuer katalytischer Strukturen zu.

Für rein analytische Fragestellungen wie die Beurteilung der Katalysatoraktivität durch Bestimmung des erreichten Monomer-Umsatzes, beispielsweise durch chromatographische Methoden, ist es ausreichend, eine Probe zur Unterbrechung der Reaktion mit einem Lösungsmittel, das für die entsprechende analytische Methode geeignet ist, zu verdünnen. Diese sehr hohen Verdünnungen können eine Weiterreaktion, zumindest bis die Analysenergebnisse vorliegen, ebenfalls unterbinden.

Erfindungsgemäß können als dem heterocyclischen Anion zugrunde liegende Neutralverbindungen Pyrazol und/oder Imidazol, substituierte Pyrazole und/oder Imidazole sowie carbocyclisch und/oder heterocyclisch annelierte Derivate des Pyrazols und/oder Imidazols verwendet werden.

Ebenso können erfindungsgemäß als dem heterocyclischen Anion zugrunde liegende Neutralverbindungen Spezies aus der Reihe der 1,2,3- sowie 1,2,4-Triazole, substituierte Spezies aus der Reihe der 1,2,3- sowie 1,2,4-Triazole sowie carbocyclisch und/oder heterocyclisch annelierte Spezies aus der Reihe der 1,2,3- sowie 1,2,4-Triazole verwendet werden.

Zur Herstellung der im erfindungsgemäßen Verfahren zum Einsatz kommenden salzartigen Katalysatoren kommen prinzipiell alle fünfgliedrigen N-Heterocyclen in Frage, die mindestens ein an ein Ringstickstoffatom gebundenes Wasserstoffatom tragen. Beispiele hierfür sind Pyrazol, Imidazol und substituierte Derivate wie 4-Nitroimidazol oder 4-Methoxyimidazol, Benzimidazol oder substituierte Benzimidazole, beispielsweise 5-Nitrobenzimidazol, 5-Methoxybenzimidazol, 2-Trifluormethylbenzimidazol, heteroaromatisch annelierte Imidazole wie Pyridinoimidazol oder Purin, 1,2,3-Triazol und substituierte Derivate wie 4-Chloro-5-carbomethoxy-1,2,3-triazol oder 4-Chloro-5-cyano-1,2,3-triazol, 1,2,4-Triazol und substituierte Derivate wie 3,5-Dibromtriazol, 1,2,3-Benztriazol und substituierte 1,2,3-Benztriazole wie 5-Fluor-1,2,3-benztriazol, 5-Trifluormethyl-1,2,3-benztriazol, 5 Nitro-1,2,3-benztriazol, 5-Methoxy-1,2,3-benztriazol, 5-Chlor-1,2,3-benztriazol, 5-Tetrafluoroethoxy-1,2,3-benztriazol, 5-Trifluorthio-1,2,3-benztriazol, 4,6-Bis(trifluormethyl)-1,2,3-benztriazol, 4-Trifluormethoxy-5-chloro-1,2,3-benztriazol, sowie heteroaromatisch annelierte 1,2,3-Triazole wie die isomeren Pyridinotriazole, z.B. das 1H-1,2,3-Triazolo[4,5-b]pyridin - im weiteren Text kurz Pyridinotriazol - und Azapurin.

Bei den vorstehend genannten Verbindungen handelt es sich überwiegend um in der Praxis gut eingeführte, literaturbekannte Stoffe. Die Synthese der Fluor enthaltenden Derivate wird beispielsweise in der DE-A 43 02 461 beschrieben.

Auch die Salze der o.g. Stickstoffhetemcyclen sind zum Teil kommerziell zugänglich, z.B. in Form ihrer Natriumsalze. Andererseits ist ihre Herstellung, beispielsweise wenn andere Gegenionen als Na⁺ zum katalytisch aktiven Anion eingesetzt werden sollen, sehr einfach nach literaturbekannten Methoden möglich. Näheres findet sich in den Beispielen. Weiterhin kann auch das optimale "Design" des Anions in Hinblick auf die katalytische Aktivität, die thermische Stabilität und die Selektivität der Reaktion bezüglich der gebildeten Isocyanat-Oligomertypen durch geeignete Substituenten am heterocyclischen Fünfring an das zu oligomerisierende Isocyanat angepasst werden.

Erfindungsgemäß werden als Oligomerisierungskatalysatoren solche eingesetzt, die als Kation Alkali-, Erdalkali- und/oder einwertige Ammonium- und/oder Phosphonium-kationen der allgemeinen Formel (5) 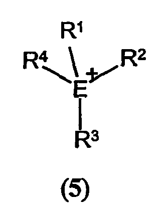 enthalten, in welcher
- E: für Stickstoff (N) oder Phosphor (P) steht und
- R¹, R², R³ und R⁴: unabhängig voneinander für gleiche oder verschiedene Reste stehen, und jeweils einen gesättigten aliphatischen oder cycloaliphatischen, einen gegebenenfalls substituierten aromatischen oder araliphatischen Rest mit bis zu 18 Kohlenstoffatomen bedeuten.

Die Wah1 des Kations für die im erfindungsgemäßen Verfahren einzusetzenden Katalysatoren ist weitgehend unkritisch. Will man den Katalysator bzw. seine im Zuge der Desaktivierung entstehenden Folgeprodukte im Anschluss an die Oligomerisierungsreaktion vom Produkt abtrennen, kann es vorteilhaft sein, polare, hochgeladene Gegenionen wie z.B. Alkali- oder Erdalkalikationen einzusetzen. Wird eine möglichst homogene Verteilung des Katalysators im für die Reaktion verwendeten Isocyanat(gemisch) sowie im Polyisocyanatharz gewünscht, wählt man hierfür lipophile Vertreter wie z.B. Ammonium- oder Phosphoniumspezies. Letztere lassen sich beispielsweise problemlos durch einfaches Zusammengeben eines Natriumtriazolates und eines Oniumchlorides, bevorzugt in Lösungsmitteln, die das dabei ausfallende Natriumchlorid nicht gut lösen, herstellen und durch Filtration sowie anschließendes Einengen auf die gewünschte Konzentration und Reinheit bringen. Bei letzterem Aufarbeitungsschritt fallen in der Regel Reste anfänglich noch gelösten Natriumchlorides ebenfalls aus und können abfiltriert werden. Beispiele hierfür geeigneter Oniumchloride sind Tetra-methyl-, -ethyl-, -propyl-, -butyl-, -hexyl- und octyl-ammoniumchlorid, aber auch gemischt substituierte Ammoniumsalze wie Benzyl-trimethylammoniumchlorid oder Methyl-trialkylammoniumchloride wobei Alkyl für geradkettige oder verzweigte C₈ bis C₁₀-Reste steht (Handelsname z.B. Aliquat^{®} oder Adogen^{®}), sowie Tetra-ethyl-, -propyl-, -butyl-, -hexyl- und octyl-phosphoniumchlorid, aber auch gemischt substituierte Phosphoniumsalze wie Alkyl-triethyl, tributyl-, trihexyl-, -trioctyl- und/oder tridodecylphosphoniumchlorid wobei Alkyl für geradkettige oder verzweigte C₄ bis C₂₀-Reste steht (Handelsname z.B. Cyphos^{®} wie Cyphos^{®} 443, Cyphos^{®} 3453, Cyphos^{®} 3653 etc.).

Zur Herstellung der erfindungsgemäßen Polyisocyanate genügen Katalysatorkonzentrationen, bezogen auf die Masse an eingesetztem(r) (Poly)isocyanat(mischung) und die Masse des eingesetzten Katalysators, zwischen 5 ppm und 5 %, bevorzugt zwischen 10 ppm und 2 %.

Die im erfindungsgemäßen Verfahren eingesetzten Katalysatoren können in Substanz oder in Lösung verwendet werden. Als Lösungsmittel kommen dabei prinzipiell alle Stoffe infrage, in denen der Katalysator unzersetzt löslich ist und die mit Isocyanaten nicht bzw. nur zu in der Polyurethanchemie gängigen, nicht störenden Folgeprodukten wie Harnstoffen, Biureten, Urethanen sowie Allophanaten reagieren. Wenn Katalysatorlösungsmittel Verwendung finden, so werden als Lösungsmittel bevorzugt Verbindungen eingesetzt, die mit den als Ausgangskomponente verwendeten Diisocyanaten zu in der Polyurethanchemie gängigen Folgeprodukten reagieren und daher nicht im Anschluss an die Reaktion abgetrennt werden müssen. Hierzu zählen geradkettige oder verzweigte, gegebenenfalls mehr als eine OH-Gruppe enthaltende Alkohole mit 1 bis 20 C-Atomen die gegebenenfalls weitere Heteroatomen, bevorzugt Sauerstoff, im Molekülverband enthalten. Beispielhaft genannt seinen Methanol, Ethanol, 1- sowie 2-Propanol, die isomeren Butanole, 2-Ethylhexanol, 2-Ethylhexan-1,3-diol, 1,3- sowie 1,4-Butandiol und 1-Methoxy-2-propanol. Besonders vorteilhaft ist, dass die o.g. Katalysatoren auch in sehr konzentrierter Lösung verwendet werden können und dabei trotzdem kaum zur Ausbildung von spontanen Übervemetzungen im zu oligomeriserenden Isocyanat fuhren.

Zur Unterbindung der Weiterreaktion nach Erreichen des gewünschten Umsetzungsgrades ("Abstoppen"), eignen sich prinzipiell alle vorbeschriebenen Methoden des Standes der Technik, wie Entfernung des Katalysators durch Extraktion oder Filtration - letzteres gegebenenfalls nach erfolgter adsorptiver Bindung an inerte Trägermaterialien - Inaktivierung des Katalysatorsystems durch thermische Desaktivierung und/oder durch Zugabe (unter)stöchiometrischer Mengen an Säuren oder Säurederivaten, z.B. Benzoylchlorid, Phthaloylchlorid, phosphinige-, phosphonige- und/oder phosphorige Säure, Phosphin-, Phosphon- und/oder Phosphorsäure sowie die sauren Ester der letztgenannten 6 Säuretypen, bevorzugt Mono- und Dialkylphosphate wie (Di)butylphosphat, (Di)octylphosphat oder (Di)trihexylphosphat, Schwefelsäure und ihre sauren Ester und/oder Sulfonsäuren, bevorzugt Methansulfonsäure, p-Toluolsulfonsäure und Alkylbenzolsulfonsäuren, Alkyl = geradkettig oder verzweigt C₂-C₂₀.

Nach einer besonderen Ausführungsform kann das erfindungsgemäße Verfahren in kontinuierlicher Fahrweise, z.B. in einem Rohrreaktor, vorgenommen werden.

Als im erfindungsgemäßen Verfahren zu oligomeriserende Isocyanate eignen sich prinzipiell alle aliphatischen Isocyanate, rein oder als Mischung untereinander. Sie haben im Kohlenstoffgrundgerüst außer den NCO-Gruppen 4 bis 20 Kohlenstoffatome. Sie können aliphatisch und/oder cycloaliphatisch gebundene NCO-Gruppen enthalten. Beispielhaft aufgeführt seien alle Regio- und Stereoisomeren der nachstehend genannten Isocyanate: Bis (isocyanatoalkyl)ether, Bis- und Tris-(isocyanatoalkyl)-benzole, -toluole, sowie -xylole, Propandiisocyanate, Butandüsocyanate, Pentandüsocyanate, Hexandüsocyanate (z.B. Hexamethylendiisocyanat, HDI, Heptandiisocyanate, Octandüsocyanate, Nonandi- (z.B. Trimethyl-HDI, TMDI, in der Regel als Gemisch der 2,4,4- und 2,2,4-Isomeren) und tri-isocyanate (z.B. 4-Isocyanatomethyl-1,8-octandüsocyanat), Dekandi- und triisocyanate, Undekandi- und triisocyanate, Dodecandi- und triisocyanate, 1,3- sowie 1,4-Bis-(isocyanatomethyl)-cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI) sowie Bis-(isocyanatomethyl)norboman (NBDI). Vorzugsweise werden HDI, TMDI, Methylpentan-1,5-diisocyanat (MPDI), H₆XDI, NBDI, IPDI und/oder H₁₂MDI eingesetzt.

Vorzugsweise werden erfindungsgemäß als zu oligomerisierende Isocyanate Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)-cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H₁₂MDI) oder Gemische dieser Diisocyanate eingesetzt.

Die anteilige Verwendung monofunktioneller Isocyanate ist gegebenenfalls in besonderen Fällen ebenfalls möglich.

Das Herstellverfahren für die im erfindungsgemäßen Verfahren einzusetztenden Ausgangsisocyanate ist für die Durchführung des erfindungsgemäßen Verfahrens unkritisch, so können die Ausgangsisocyanate mit oder ohne Verwendung von Phosgen generiert worden sein.

Die erfindungsgemäße katalytische Umsetzung kann prinzipiell bei jeder technisch realisierbaren Temperatur durchgeführt werden. Üblich sind Reaktionstemperaturen oberhalb 0°C, bevorzugt wird zwischen 20 und 100°C, besonders bevorzugt zwischen 40 und 100°C gearbeitet.

Die erfindungsgemäßen Polyisocyanate lassen sich durch die üblichen Verfahren des Standes der Technik isolieren und reinigen, wie z.B. Dünnschichtdestillation, Extraktion, Kristallisation und/oder Molekulardestillation. Sie fallen dabei als farblose oder nur schwach gefärbte Flüssigkeiten oder Feststoffe an.

Die erfindungsgemäß hergestellten Polyisocyanate stellen vielseitig verwendbare Ausgangsmaterialien zur Herstellung von Polymeren wie gegebenenfalls geschäumten Kunststoffen, Polyurethan-Lacken, Beschichtungsmitteln, Klebstoffen und Zuschlagstoffen dar.

Insbesondere zur Herstellung von Ein- und Zweikomponenten-Polyurethanlacken eignen sie sich, gegebenenfalls in NCO-blockierter Form, aufgrund ihrer im Vergleich zu Polyisocyanaten vom Trimertyp verringerten Viskosität bei ansonsten gleich hohem bzw. verbessertem Eigenschaftsprofil. Sie können hierzu rein oder gegebenenfalls, in Verbindung mit anderen Isocyanatderivaten des Standes der Technik, wie Uretdion-, Biuret-, Allophanat-, Isocyanurat-, Urethan- sowie Carbodiimid-Polyisocyanaten, deren freie NCO-Gruppen ggf. mit Blockierungsmitteln desaktiviert wurden, eingesetzt werden.

Die resultierenden Kunststoffe und Beschichtungen sind außerordentlich hochwertige Produkte mit dem für die genannten, bewährten Systeme des Standes der Technik typischen Eigenschaftspröfil.

Bei der Verwendung als Vernetzerkomponente in 2K-Beschichtungen werden die erfindungsgemäßen Polyisocyanate in der Regel mit OH- und/oder NH-Komponenten kombiniert, wie sie aus 2K-Polyurethansystemen an sich bekannt sind, so z.B. hydroxyfunktionellen Polyestern, Polyacrylaten, Polycarbonaten, Polyethern, Polyurethanen sowie polyfunktionellen Aminen. Sie können aber auch einkomponentig zur Herstellung (anteilig) feuchtigkeitshärtender Kunststoffe und Beschichtungen verwendet werden.

Neben den erfindungsgemäßen Polyisocyanaten und den gegebenenfalls mitverwendeten weiteren Bindemittelkomponenten und Lacklösungsmitteln oder Lacklösungsmittelgemischen wie beispielsweise Toluol, Xylol, Cyclohexan, Chlorbenzol, Butylacetat, Ethylacetat, Ethylglykolacetat, Methoxypropylacetat, Aceton, Testbenzin, höher substituierte Aromaten (Solventnaphtha^{®}, Solvesso^{®}, Shellsol^{®}, Isopar^{®}, Nappar^{®}, Diasol^{®}) können in den Beschichtungen auch weitere Hilfs- und Zusatzmittel verwendet werden, wie z.B. Benetzungsmittel, Verlaufsmittel, Hautverhinderungsmittel, Antischaummittel, Mattierungsmittel, viskositätsregulierende Stoffe, Pigmente, Farbstoffe, UV-Absorber, Katalysatoren und Stabilisatoren gegen thermische und oxidative Einflüsse.

Die Polyisocyanate auf Basis der erfindungsgemäß hergestellten Oligomerenmischungen können zur Beschichtung bzw. als Zuschlagstoff zur Ausrüstung einer Vielzahl von Materialien dienen, wie z.B. Holz, Kunststoff, Leder, Metall, Papier, Beton, Mauerwerk, Keramik und Textil.

### Beispiele

Alle Prozentangaben sind, soweit nicht anders vermerkt, als Gewichtsprozent zu verstehen.

Die Ermittlung des NCO-Gehaltes der in den Beispielen und Vergleichsbeispielen beschriebenen Harze erfolgt durch Titration gemäß DIN 53 185.

Die dynamischen Viskositäten der Polyisocyanatharze werden bei 23°C mit dem Viskosimeter VT 550, Platte-Kegel Messanordnung PK 100, der Fa. Haake bestimmt. Durch Messungen bei unterschiedlichen Schergeschwindigkeiten wird sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Angabe von Mol-% bzw. des molaren Verhältnisses unterschiedlicher Strukturtypen zueinander basiert auf NMR-spektroskopischen Messungen. Sie bezieht sich immer, so nicht anders ausgewiesen, auf die Summe der durch die Modifizierungsreaktion (Oligomerisierung) aus den vorher freien NCO-Gruppen gebildeten Strukturtypen. Die Messungen erfolgen auf dem Gerät DPX 400 der Fa. Bruker an ca. 5 %igen (¹H-NMR) bzw. ca. 50 %igen (¹³C-NMR) Proben in trokkenem CDCl₃ bei einer Frequenz von 400 MHz (¹H-NMR) bzw. 100 MHz (¹³C-NMR). Als Referenz für die ppm-Skale werden geringe Mengen von Tetramethylsilan im Lösungsmittel mit einer ¹H-chem. Verschiebung von 0 ppm (¹H-NMR) bzw. das Lösungsmittel selbst (CDCl₃) mit einer Verschiebung von 77,0 ppm (¹³C-NMR) gewählt. Daten für die chemische Verschiebung der in Frage kommenden Verbindungen sind der Literatur entnommen (vgl *Die Angewandte Makromolekulare Chemie* **1986**, *141*, 173-183 und darin zit. Lit) bzw. durch Vermessung von Modellsubstanzen gewonnen worden. Das in Anlehnung an das in *Ber. d. dtsch Chem. Ges.* **1927**, *60,* 295 beschriebene Verfahren aus Methylisocyanat zugängliche 3,5-Dimethyl-2-methylimino-4,6-diketo-1,3,5-oxadiazin (Methylisocyanat-Trimer vom Iminooxadiazindiontyp) weist folgende NMR-chem. Verschiebungen auf (in ppm): 3,09; 3,08 und 2,84 (¹H-NMR, CH₃) bzw. 148,3; 144,6 und 137,3 (¹³C-NMR, C=O/C=N). Iminooxadiazindione aus aliphatischen Diisocyanaten wie z.B. HDI haben sehr ähnliche ¹³C-NMR chem. Verschiebungen der C=O/C=N Atome und sind zweifelsfrei als solche von anderen Isocyanat-Folgeprodukten zu unterscheiden.

Der überwiegende Teil der Reaktionen wird in parallelisierter Arbeitweise durchgeführt. Die Übertragbarkeit in den üblichen Labormaßstab ist durch entsprechende Kontrollexperimente abgesichert worden (vgl. Beispiel 4).

### Katalysatorherstellung

### Allgemeines

Natrium-1,2,4-Triazolat und Na-Imidazolat sind kommerziell von der Fa. Aldrich erhältlich oder können durch Deprotonierung von 1,2,4-Triazol oder Imidazol, z.B. mit einer methanolischen Lösung von Natriummethanolat, Na⁺ MeO⁻, hergestellt werden. Die so erhaltenen, methanolischen Lösungen des Natriumsalzes sind als solche, gegebenenfalls nach vorheriger Umkristallisation des Salzes, für die Katalyse eingesetzt worden und werden darüber hinaus zur Herstellung von Katalysatorsystemen mit anderen als dem Na⁺-Kation als Gegenion zum Azolat-Anion verwendet. Durch Umsetzung der NH-aciden Neutralverbindungen mit anderen Alkali- oder Erdalkali-alkoholaten bzw. -hydroxiden (Li, K, NH4, Mg etc.) lassen sich weitere Katalysatorsysteme generieren, die sowohl in der erfindungsgemäßen Reaktion als auch für die Herstellung von Katalysatorsystemen mit anderen als den o.g. Alkali- oder Erdalkali-Kationen als Gegenion zum Azolat-Anion zum Einsatz gelangen können.

Als Beispiele werden anschließend die Synthesen eines Na-Derivates und eines Tetrabutylphosphoniumderivates beschrieben. Andere Na-Derivate, andere Alkali- oder Erdalkaliderivate (siehe Tabelle 1) sowie andere Tetraalkyl-ammonium- sowie -phosphoniumderivate (siehe Tabelle 2) werden völlig analog erhalten.

### Herstellung von Na-1,2,3-Triazolat (Katalysator Nr.1)

In einer 3-Halskolben-Rührapparatur mit mechanischem Rührer, Innenthermometer und Rückflusskühler, der an eine Inertgasanlage angeschlossen ist (Argon), werden 200 ml trockenes Methanol und 0,25 mol Na-Methanolat (30 %ig in Methanol, Fa. Aldrich, 48 ml) vorgelegt. Hierzu gibt man bei Raumtemperatur portionsweise 0,25 mol (17,4 g) 1H-1,2,3-Triazol (Fa. Aldrich). Nach beendeter Zugabe des 1H-1,2,3-Triazols wird die Reaktionsmischung 4 h bei Rückflußtemperatur gerührt. Das Lösungsmittel wird bei vermindertem Druck abdestilliert und der verbleibende ölige Rückstand bei Raumtemperatur mit 200 ml Methylenchlorid versetzt. Man rührt 15 min bei Raumtemperatur und filtriert das als Feststoff ausgefallene Produkt ab. Das Produkt ist ¹H-NMR-spektroskopisch rein und frei von eingesetztem 1H-1,2,3-Triazol. Für Katalyseexperimente wird eine 1 M Lösung dieses Na-1,2,3-Triazolates in DMSO hergestellt.

Weitere Na-Azolat-Verbindungen werden in völlig analoger Weise aus den zugrunde liegenden N-H-Verbindungen erhalten (Tabelle 1). Zum Einsatz in der erfindungsgemäßen Oligomerisierungsreaktion werden die Verbindungen in den in Tab. 1 aufgeführten Lösungsmitteln gelöst.

**Tabelle 1: Katalysatorübersicht**

| Katalysator-Nummer | Kation | Anion | Konzentration [M] | Lösungsmittel |
|---|---|---|---|---|
| 1 | Na⁺ | 1,2,3-Triazolat | 1,0 | DMSO |
| 2 | Na⁺ | 1,2,4-Triazolat | 1,0 | DMSO |
| 3 | Na⁺ | 1,2,3-Benztriazolat | 0,6 | DMSO |
| 4 | Na⁺ | 5-(Trifluormethyl)thio-1,2,3-benztriazolat | 1,0 | DMSO |
| 5 | Na⁺ | Pyridino-1,2,3-triazolat | 0,9 | DMSO |
| 6 | Na⁺ | Imidazolat | 1,0 | DMSO |
| 7 | Na⁺ | 4-Nitroimidazolat | 1,0 | DMSO |
| 8 | Na⁺ | Benzimidazolat | 1,0 | DMSO |
| 9 | Na⁺ | 5-Nitrobenzimidazolat | 1,0 | DMSO |
| 10 | K⁺ | 1,2,3-Triazolat | 1,5 | Isopropanol |
| 11 | Na⁺ | Purin-Anion | 1,0 | DMSO |

### Herstellung von Tetrabutylphosphonium-1,2,3-triazolat (Katalysator Nr. 12)

In einer 3-Halskolben Rührapparatur mit mechanischem Rührer, Innenthermometer und Rückflußkühler, der an eine Inertgasanlage angeschlossen ist (Stickstoff), werden zu 0,1 mol (18 g) einer 30 %igen methanolischen Natriummethanolat-Lösung (Fa. Aldrich) bei Zimmertemperatur 0,1 mol (6,9 g) 1,2,3-Triazol (Fa. Aldrich), gelöst in 20 ml Methanol, getropft. Nach vollständiger Zugabe wird eine Stunde bei Zimmertemperatur nachgerührt und anschließend werden 41,3 g einer 71,4 %igen Lösung von Tetrabutylphosphoniumchlorid, Bu₄P⁺ Cl⁻, in iso-Propanol (0,1 mol; Cyphos^{®} 443P, Produkt der Fa. Cytec) zugetropft. Die Ausscheidung von Natriumchlorid setzt unmittelbar nach Zugabe der ersten Tropfen an Tetrabutylphosphoniumchloridlösung ein. Nach vollständiger Zugabe wird eine Stunde bei Zimmertemperatur nachgerührt, filtriert und am Rotationsverdampfer bei ca. 1 mbar und einer Badtemperatur bis maximal 50°C eingeengt. Der Rückstand wird erneut filtriert und die resultierende klare, nahezu farblose Flüssigkeit mit 0,1 n HCl gegen Phenolphthalein titriert. Ihr Gehalt beläuft sich auf 73 % an Tetrabutylphosphonium-1,2,3-triazolat. Für Katalyseversuche wird das Triazolatsalz auf eine Konzentration von 0,8 M in Isopropanol eingestellt.

Weitere Azolat-Systeme auf Basis von 1,2,4-Triazolaten, 1,2,3-Triazolaten, Benztriazolaten, Imidazolaten, Benzimidazolaten, Pyrazolaten und verwandten N-H-enthaltenen Heterocyclen sowie anderer Kationen werden völlig analog aus den zugrundeliegenden, N-H-Gruppen aufweisenden Neutralverbindungen und Ammonium -bzw. Phosphoniumhalogeniden erhalten. N-H-Stickstoffheterocyclen sowie Ammoniumchloride werden von der Fa. Aldrich bezogen, Phosphoniumchloride, ggf. in gelöster Form, von der Fa. Cytec. Der Gehalt an aktivem Katalysator wird nach Aufarbeitung durch einfache acidimetrische Titration mit 0,1 n HCl bestimmt. Die so erhaltenen Lösungen können je nach Anwendungsgebiet unverdünnt oder verdünnt eingesetzt werden. In Tabelle 2 sind die zur Verdünnung eingesetzten Lösungsmittel sowie die für die Katalyseexperimente eingestellten Konzentrationen aufgeführt.

**Tabelle 2: Katalysatorübersicht**

| Katalysator-Nummer | Kation | Anion | Konzentration [M] | Lösungsmittel |
|---|---|---|---|---|
| 12 | Bu₄P⁺ | 1,2,3-Triazolat | 0,8 | Isopropanol |
| 13 | C₁₄H₂₉P⁺(C₆H₁₃)₃ | 1,2,3-Triazolat | 1,0 | Isopropanol |
| 14 | C₁₄H₂₉P⁺(C₆H₁₃)₃ | 1,2,4-Triazolat | 1,0 | 1-Methoxy-2-propanol |
| 15 | Bu₄P⁺ | Benztriazolat | 0,8 | Isopropanol |
| 16 | Bz(Et₃)N⁺ | 1,2,4-Triazolat | 1,0 | 2-Ethylhexanol |
| 17 | C₁₄H₂₉P⁺(C₆H₁₃)₃ | Pyridinotriazolat | 1,7 | 1-Methoxy-2-propanol |

### Beispiele 1 bis 3: Erfindungsgemäße Oligomerisierungsreaktionen

### Allgemeine Vorschrift

Ein Rollrandgefäß mit Septumverschluß wird zweimal evakuiert und mit Argon gefällt. In das so vorbereitete Gefäß werden mit Hilfe einer Spritze jeweils 5 ml Düsocyanat eingefüllt, danach werden unter Rühren die entsprechenden Mengen an Katalysatorlösung zugegeben. Zu den Katalysatornummern vgl. Tabelle 1 und 2, die Mengenangabe "Mol-%" in den Tabellen 3 bis 6 bezieht sich jeweils auf die Objektmenge an eingesetztem Diisocyanat und verwendetem Katalysator um den in den jeweiligen Versuchen erzielten Umsatz zu realisieren. Das erhaltene Reaktionsgemisch wird in einem Ölbad oder in einem Rührheizblock (z.B. Variomag Reaktionsblock Typ 48.2/RM der Firma H&P) bei der gewünschten Temperatur umgesetzt. Nach beendeter Reaktion, entweder definiert durch eine vorgegebene Reaktionszeit oder durch das Erreichen einer merklichen Viskosität, wird ein Aliquot des Reaktionsgemisches (20 bis 40 mg) in 3 ml Chloroform gelöst und durch Gelpermeationschromatographie untersucht. Die ermittelte umgesetzte Menge an Diisocyanat ist ein Maß für die Aktivität des Katalysators. Zur Bestimmung der Produktselektivität eines Katalysators wird entweder mittels HPLC- oder ¹³C-NMR analysiert. Für die HPLC-Analytik werden etwa 50 mg des Reaktionsgemisches mit überschüssigem 2-Methoxyphenylpiperazin (MPP) in Acetonitril umgesetzt, einerseits um die Isocyanatgruppen zu derivatisieren und andererseits um die einzelnen Komponenten des Polyisocyanatgemisches in Form ihrer MPP-Derivate leichter durch UV-Detektion nachweisen zu können. Hierbei werden nur die Oligomeren mit dem jeweils niedrigsten Molekulargewicht berücksichtigt, d.h. die Idealstrukturen 1, 2 und 3 als Reaktionsprodukt mit jeweils 2 bzw. 3 mol MPP. Für die ¹³C-NMR-Analytik werden 0,5 ml Reaktionsgemisch mit, bezogen auf die eingesetzten Katalysatormengen, stöchiometrischen Mengen an Di-n-butylphosphat versetzt, um den Katalysator zu deaktivieren und eine Weiterreaktion zu unterbinden. Die ¹³C-NMR-spektroskopischen Untersuchungen erfolgen in ca. 50 %iger Lösung in deuteriertem Chloroform. Hierbei werden, wie weiter oben bereits ausgeführt, die Strukturen aller Oligomerer und nicht nur der "Idealstrukturen" summarisch erfasst. Vergleichende Angaben beziehen sich mithin auf die Objektmenge (Mol) an den Strukturtypen Uretdion, Isocyanurat und Iminooxadiazindion.

Üblicherweise werden mehrere Versuche gleichzeitig durchgeführt. Dabei werden entweder von einem Katalysator mehrere Konzentrationen gleichzeitig geprüft, oder es werden mehrere Katalysatoren bei unterschiedlichen Konzentrationen getestet. Diese Methodik kann prinzipiell mit allen verfügbaren NCO-mono-, -di- oder auch -höherfunktionellen Isocyanaten durchgeführt werden.

### Vergleichsbeispiele 1 bis 3

Die Umsetzung verschiedener aliphatischer Düsocyanate mit den literaturbekannten Katalysatoren:
- Benzyltrimethylammoniumhydroxid, vgl. EP-A 0 010 589 (verwendet wird das unter dem Handelsnamen Triton^{®} B als 40 %ige methanolische Lösung von der Fa. Aldrich angebotene Produkt),
- Tri-n-butylphosphin, vgl. DE-A 16 70 720 (Katalysator: Cytop^{®} 340, Fa. Cytec, unverdünnt) sowie
- 4-Dimethylaminopyridin, vgl. DE-A 37 39 549 (Katalysator: DMAP, Fa. Aldrich, unverdünnt)
erfolgt nach oben beschriebener Vorschrift. Ausgewählte Analysen- und Berechnungsergebnisse für die Verwendung dieser, nicht erfindungsgemäßen Katalysatoren, sind in den Tabellen 3 und 4 dargestellt. Wie man sofort erkennt, ist das salzartig aufgebaute Tetraalkylammoniumhydroxid sehr aktiv, liefert aber nur geringe Uretdionanteile im Produktgemisch. Die beiden kovalent aufgebauten Katalysatoren liefern zwar hohe Uretdionanteile im Produktgemisch, ihre Aktivität ist aber gering, so dass selbst bei Einsatz hoher Katalysatorkonzentrationen, insbesondere bei den cycloaliphatischen Diisocyanaten IPDI und H₁₂MDI, nur ein sehr langsamer Umsatz eintritt.

**Tabelle 3 Resultate der HDI Oligomerisierung mit literaturbekannten Katalysatoren (Vergleichsbeispiel 1, nicht erfindungsgemäß) ¹⁾ bestimmt durch Gelpermeationschromatographie (Umsatz =100 - Menge HDI) ²⁾ bestimmt durch HPLC, normiert auf die 3 in der Tabelle aufgeführten Spezies (Idealstrukturen 1, 2 und 3)**

| **Vgl.-bsp.** | **Reaktion** | | | | **Umsatz** | **Produkte** | | |
|---|---|---|---|---|---|---|---|---|
| 1 | Katalysator | Kat.-Konz. [mol-%] | Zeit [h] | Temp. [°C] | [%]¹⁾ | Uretdion [%]²⁾ | Isocyanurat [%]²⁾ | Iminooxadiazindion [%]²⁾ |
| a | Triton B (40%ig in Methanol) | 0,035 | 0,25 | 60 | 42,7 | 2,1 | 94,4 | 3,5 |
| b | Tri-n-butylphosphin | 1,30 | 1,5 | 60 | 40,6 | 69,7 | 15,7 | 14,6 |

**Tabelle 4 Resultate der IPDI- (Vergleichsbeispiele 2a-c) sowie H₁₂MDI-Oligomerisierung (Vergleichsbeispiele 3a-c) mit literaturbekannten Katalysatoren (nicht erfindungsgemäß) ¹⁾ bestimmt durch Gelpermeationschromatographie (Umsatz =100 - Menge Monomer) ²⁾ bestimmt durch ¹³C-NMR-Spektroskopie, normiert auf die beiden in der Tabelle aufgeführten Strukturtypen**

| **Vgl.- bsp.** | **Reaktion** | | | | **Umsatz** | **Produkte** | |
|---|---|---|---|---|---|---|---|
| | **Katalysator Uretdione Isocyanurate** | **kat.-konz [mol%]** | **Zeit [h]** | **Temp [°C]** | **[%]¹⁾** | **[mol-%]²⁾** | **[mol-%]²⁾** |
| 2a | Triton B (40%ig in Methanol) | 0,07 | 2,5 | 60 | 43,1 | 2,1 | 97,9 |
| 2b | 4-Dimethylaminopyridin | 1,7 | 24 | 40 | 30,0 | 98,8 | 1,2 |
| 2c | Tri-n-butylphosphin | 2 | 5,5 | 40 | 18,7 | 69,3 | 30,7 |
| 3a | Triton B (40 %ig in Methanol) | 0,2 | 21,5 | 40 | 51,7 | 1,2 | 98,8 |
| 3b | 4-Dimethylaminopyridin | 2 | 456 | 40 | 14,3 | 97,8 | 2,2 |
| 3c | Tri-n-butylphosphin | 2 | 48 | 40 | 3,9 | 86,5 | 13,5 |

**Tabelle 5 Resultate der erfindungsgemäßen HDI Oligomerisierung (Beispiel 1) ¹⁾ bestimmt durch Gelpermeationschromatographie (Umsatz = 100 - Menge HDI) ²⁾ bestimmt durch HPLC, normiert auf die 3 in der Tabelle aufgeführten Spezies (Idealstrukturen 1, 2 und 3)**

| **Bsp.** | **Reaktion** | | | | **Umsatz** | **Produkt** | | |
|---|---|---|---|---|---|---|---|---|
| **1** | **Katalysator-Nr (siehe Tabellen 1 und 2)** | **Kat-Konz. [mol%]** | **Zeit. [h].** | **Temp. [°C]** | **[%]¹⁾** | **Uretdion [%]²⁾** | **Isocyanurat [%]²⁾** | **Iminooxadiazindion[%]²⁾** |
| a | 1 | 0,06 | 0,33 | 60 | 30,1 | 59,2 | 23,3 | 17,6 |
| b | 2 | 0,19 | 2,0 | 60 | 44,6 | 22,6 | 67,7 | 9,7 |
| c | 3 | 0,10 | 0,58 | 60 | 43,1 | 58,6 | 16,5 | 24,9 |
| d | 4 | 0,13 | 0,92 | 60 | 32,2 | 57,5 | 34,5 | 8,0 |
| e | 5 | 0,15 | 5,0 | 60 | 33,9 | 74,6 | 11,4 | 14,0 |
| f | 7 | 0,65 | 3,5 | 60 | 57,3 | 34,9 | 31,3 | 33,7 |
| g | 8 | 0,13 | 0,5 | 60 | 27,8 | 24,3 | 69,0 | 6,7 |
| h | 9 | 0,09 | 1,75 | 60 | 54,5 | 35,7 | 56,9 | 7,4 |
| i | 10 | 0,03 | 0,5 | 60 | 18,1 | 40,0 | 49,0 | 10,0 |
| j | 11 | 0,01 | 1,25 | 60 | 47,7 | 12,3 | 82,9 | 4,9 |
| k | 12 | 0,01 | 0,5 | 60 | 30,6 | 43,8 | 34,9 | 21,3 |
| 1 | 13 | 0,06 | 0,5 | 80 | 17,5 | 66,4 | 15,0 | 18,6 |
| m | 14 | 0,03 | 1,75 | 70 | 28,3 | 21,5 | 71,5 | 7,0 |
| n | 15 | 0,05 | 1,0 | 70 | 34,2 | 35,4 | 46,4 | 18,2 |
| o | 16 | 0,07 | 1,0 | 60 | 29,9 | 26,3 | 60,5 | 13,2 |
| p | 17 | 0,03 | 5,5 | 60 | 38,7 | 50,9 | 39,3 | 9,8 |

**Tabelle 6 Resultate der erfindungsgemäßen IPDI- (Bsp. 2) sowie H₁₂MDI-Oligomerisierung (Beispiel 3) ¹⁾ bestimmt durch Gelpermeationschromatographie (Umsatz = 100 - Menge Monomer) ²⁾ bestimmt durch ¹³C-NMR-Spektroskopie, normiert auf die beiden in der Tabelle aufgeführten Strukturtypen**

| **Bsp.** | **Reaktion** | | | | **Umsatz** | **Produkt** | |
|---|---|---|---|---|---|---|---|
| | **Katalysator-Nr. (siehe Tabellen 1 und 2)** | **Kat.-Konk [mol%]** | **Zeit [h]** | **Temp. [°C]** | **[%]¹⁾** | **Uretdione [mol%]²⁾** | **Isocyanurate [mol%]²⁾** |
| 2 | 6 | 0,5 | 0,25 | 40 | 48,0 | 40,5 | 59,5 |
| 3 | 6 | 0,5 | 0,08 | 40 | 35,5 | 43,1 | 56,9 |

### Beispiel 4

### erfindungs gemäße Herstellung eines HDI-Polyisocyanates

1680 g (10 mol) frisch destilliertes HDI werden in einer Dreihalskolben-Rührapparatur zunächst bei 60°C im Vakuum (0,1 mbar) zur Entfernung gelöster Gase 1 h gerührt, anschließend mit trockenem Stickstoff belüftet und unter Rühren bei 60°C mit der Katalysatorlösung Nr. 13 tropfenweise versetzt, bis die Reaktion, erkennbar an einem Temperaturanstieg um ein bis zwei Grad, einsetzt. Durch gelegentliche Zugabe weiteren Katalysators (Summe: 4,6 g Katalysatorlösung = 0,046 mol-% Katalysator bezogen auf die Objektmengen an eingesetztem HDI sowie Tetradecyl(tnhexyl)phosphonium-1,2,3-triazolat) wird die Reaktion bei einer Temperatur der Mischung zwischen 60 und 70°C innerhalb einer Stunde zum gewünschten Umsatz, detektiert durch den Brechungsindex, n_{D}²⁰, geführt. Bei n_{D}²⁰ = 1,4668 wird die Weiterreaktion durch Zugabe von 1,9 g einer 42 %igen Lösung von p-Toluolsulfonsäure in iso-Propanol unterbrochen ("abgestoppt"). Das so erhaltene Rohprodukt wird anschließend durch Dünnschichtdestillation bei 120°C/0,1 mbar in einem Kurzwegverdampfer vom nicht umgesetzten Monomer befreit. Dabei fallen als Destillationsrückstand 572,9 g, entsprechend 34,1 % Harzausbeute, eines nahezu farblosen Polyisocyanatharzes mit folgenden Daten an: NCO-Gehalt: 23,0 %, Viskosität bei 23°C: 280 mPas, freies Monomer: 0,11 %. Die strukturelle Zusammensetzung des Polyisocyanatharzes wird wie eingangs beschrieben bestimmt: 51 mol-% Uretdione, 22,4 mol-% Isocyanurate, 26,6 mol-% Iminooxadiazindione. Das wiedergewonnene HDI kann problemlos erneut eingesetzt werden.

### Beispiel 5: Verwendungsbeispiel

10g des Polyisocyanates erhalten nach Beispiel 4 werden zunächst mit 50 mg einer 10 %igen Lösung von Dibutylzinndilaurat in Butylacetat versetzt und anschließend mit 24,7 g eines Hydroxylgruppen enthaltenden Acrylates hergestellt aus 40 % Styrol, 34 % Hydroxyethylmethacrylat, 25 % Butylacrylat und 1 % Acrylsäure mit einem OH-Gehalt nach DIN 53 240 von 3 %, einer Säurezahl nach DIN 53402 von 8 und einer Viskosität 3500 mPas bei 23°C (als 70 %ige Lösung in Butylacetat) - vermischt (NCO:OH-Verhältnis = 1,1:1), in einer 120 µm dicken Schicht auf eine Glasplatte aufgetragen und einer forcierten Trocknung für 30 Minuten bei 60°C unterworfen. Man erhält einen klaren, hochglänzenden Lackfilm, der nach 100 Doppelhüben mit MEK keine Schädigung aufweist und mit einem Bleistift der Härte HB nicht anritzbar ist.

## Patentansprüche

1. Verfahren zur katalytischen Oligomerisierung von aliphatischen Isocyanaten, **dadurch gekennzeichnet, dass** als Oligomensegskatalysatoren salzartige Verbindungen zum Einsatz kommen, wobei Pyrazol und/oder Imidazol,substituierte Pyrazole und/oder Imidazole sowie carbocyclisch und/oder heterocyclisch annelierte Derivate des Pyrazols und/oder Imidazols, sowie Spezies aus der Reihe der 1,2,3- sowie 1,2,4-Triazole, substituierte Spezies aus der Reihe der 1,2,3- sowie 1,2,4-Triazole sowie carbocyclisch und/oder heterocyclisch annelierte Spezies aus der Reihe der 1,2,3- sowie 1,2,4-Triazole verwendet werden.

2. Verfahren gemäß Anspruch 1, **dadurch gekennzeichnet, daß** man Oligomerisienmskatalysatoren einsetzt, die als Kation Alkali-, Erdalkali- und/oder einwertige Ammonium- und/oder Phosphonium-kationen der allgemeinen Formel (5) 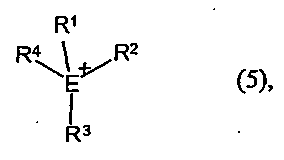 enthalten, in welcher
E für Stickstoff oder Phosphor steht und
R¹, R², R³ und R⁴ unabhängig voneinander für gleiche oder verschiedene Reste stehen, und jeweils einen gesättigten aliphatischen oder cycloaliphatischen, einen gegebenenfalls substituierten aromatischen oder araliphatischen Rest mit bis zu 18 Kohlenstoffatomen bedeuten.

3. Verfahren gemäß Anspruch 1, **dadurch gekennzeichnet, dass** als zu oligomerisierende aliphatishe Isocyanate Diisocyanate, rein oder im Gemisch mit anderen Diisocyanaten, eingesetzt werden, die im Kohlenstoffgrundgerüst außer den NCO-Gruppen 4 bis 20 Kohlenstoffatome aufweisen.

4. Verfahren gemäß Anspruch 1, **dadurch gekennzeichnet, dass** als zu oligomerisierende aliphatishe Isocyanate Diisocyanate mit aliphatisch und/oder cycloaliphatisch gebundenen NCO-Gruppen eingesetzt werden.

5. Verfahren gemäß Anspruch 1, **dadurch gekennzeichnet, dass** als zu oligomerisierende aliphatische Isocyanate Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norboman (NBDI), 3(4)-Isocyanatomethyl-1-methyl-cyclohexylisocyanat (IMCI) und/oder 4,4'-Bis (isocyanatocyclohexyl)methan (H₁₂MDI) oder beliebige Gemische dieser Diisocyanate eingesetzt werden.

## Claims

1. Process for catalytic oligomerization of aliphatic isocyanates, **characterized in that** oligomerization catalysts used comprise saltlike compounds, pyrazole and/or imidazole, substituted pyrazoles and/or imidazoles, and carbocyclically and/or heterocyclically fused derivatives of pyrazole and/or imidazole, and species from the series of the 1,2,3- and 1,2,4-triazoles, substituted species from the series of the 1,2,3- and 1,2,4-triazoles, and carbocyclically and/or heterocyclically fused species from the series of the 1,2,3- and 1,2,4-triazoles being used.

2. Process according to Claim 1, **characterized in that** oligomerization catalysts are used comprising as cation alkali metal, alkaline earth metal and/or monovalent ammonium and/or phosphonium cations of the general formula (5) 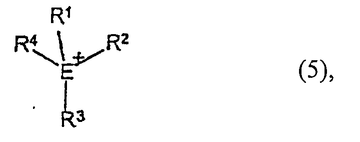 in which
E represents nitrogen or phosphorus and
R¹, R², R³, and R⁴ independently of one another represent identical or different radicals and each denote a saturated aliphatic or cycloaliphatic or an optionally substituted aromatic or araliphatic radical having up to 18 carbon atoms.

3. Process according to Claim 1, **characterized in that** as aliphatic isocyanates to be oligomerized use is made of diisocyanates, alone or mixed with other diisocyanates, which in the carbon framework besides the NCO groups have from 4 to 20 carbon atoms.

4. Process according to Claim 1, **characterized in that** as aliphatic isocyanates to be oligomerized use is made of diisocyanates having aliphatically and/or cycloaliphatically attached NCO groups.

5. Process according to Claim 1, **characterized in that** as aliphatic isocyanates to be oligomerized use is made of hexamethylene diisocyanate (HDI), trimethyl-HDI (TMDI), 2-methylpentane 1,5-diisocyanate (MPDI), isophorone diisocyanate (IPDI), 1,3- and 1,4-bis(isocyanatomethyl)cyclohexane (H₆XDI), bis(isocyanatomethyl)norbornane (NBDI), 3(4)-isocyanatomethyl-1-methyl-cyclohexyl isocyanate (IMCI) and/or 4,4'-bis(isocyanatocyclohexyl)methane (H₁₂MDI) or any desired mixtures of these diisocyanates.

## Revendications

1. Procédé d'oligomérisation catalytique d'isocyanates aliphatiques, **caractérisé en ce que** comme catalyseur d'oligomérisation, on met en oeuvre des composés de type sel, où l'on utilise le pyrazole et/ou l'imidazole, des pyrazoles et/ou imidazoles substitués, ainsi que des dérivés condensés carbocycliques et/ou hétérocycliques du pyrazole et/ou de l'imidazole, ainsi que des espèces des séries 1,2,3- ainsi que 1,2,4-triazole, des espèces substituées des séries 1,2,3- ainsi que 1,2,4-triazole, ainsi que des dérivés condensés carbocycliques et/ou hétérocycliques des séries 1,2,3- ainsi que 1,2,4-triazole.

2. Procédé selon la revendication 1, **caractérisé en ce que** l'on met en oeuvre des catalyseurs d'oligomérisation, qui contiennent comme cation, des cations alcalins, alcalino-terreux et/ou ammonium et/ou phosphonium monovalents, de la formule générale (5) : 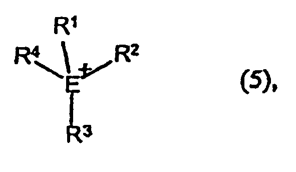 dans laquelle :
E représente l'atome d'azote ou de phosphore, et
R¹, R², R³ et R⁴ représentent indépendamment l'un de l'autre, des restes identiques ou différents, et signifient chaque fois, un reste aliphatique saturé ou cycloaliphatique, un reste aromatique ou araliphatique le cas échéant substitué, ayant jusqu'à 18 atomes de carbone.

3. Procédé selon la revendication 1, **caractérisé en ce que** comme isocyanate aliphatique à oligomériser, on met en oeuvre des diisocyanates, purs ou en mélange avec d'autres diisocyanates, lesquels présentent dans le squelette carboné, en plus des groupes NCO, 4 à 20 atomes de carbone.

4. Procédé selon la revendication 1, **caractérisé en ce que** comme isocyanate aliphatique à oligomériser, on met en oeuvre des diisocyanates avec des groupes NCO liés de manière aliphatique et/ou cycloaliphatique.

5. Procédé selon la revendication 1, **caractérisé en ce que** comme isocyanate aliphatique à oligomériser, on met en oeuvre l'hexaméthylènediisocyanate (HDI), le triméthyl-HDI (TMDI), le 2-méthylpentane-1,5-diisocyanate (MPDI), l'isophoronediisocyanate (IPDI), le 1,3-, ainsi que le 1,4-bis(isocyanatométhyl)cyclohexane (H₆XDI), le bis(isocyanatométhyl)norbornane (NBDI), le 3(4)isocyanatométhyl-1-méthylcyclohexylisocyanate (IMCI) et/ou le 4,4'-bis(isocyanatocyclohexyl)méthane (H₁₂MDI) ou des mélanges quelconques de ces diisocyanates.
